# EUROPEAN PATENT SPECIFICATION

(11) **EP 4 006 113 B1**
(45) Date of publication and mention of the grant of the patent: **31.12.2025**
(21) Application number: 20842952.2
(22) Date of filing: 30.06.2020
(51) Int. Cl.: C09D 109/00, C09D 191/06, F16J 15/3284, C09D 7/65

(54) **COATING AGENT FOR OIL SEAL**
BESCHICHTUNGSMITTEL FÜR ÖLDICHTUNG
AGENT DE REVÊTEMENT POUR JOINT ÉTANCHE À L'HUILE

(30) Priority: 25.07.2019 JP 2019136651
(43) Date of publication of application: 01.06.2022
(73) Proprietor: NOK Corporation, Minato-ku Tokyo 105-8585 (JP)
(72) Inventor: YASUNAGA, Natsumi, Fukushima-shi, Fukushima 960-1102 (JP)
(74) Representative: Kraus & Lederer PartGmbB
(86) International application number: PCT/JP2020/025688
(87) International publication number: WO 2021/014902

(56) References cited:
- EP-A1- 3 272 820
- WO-A1-2016/018123
- CN-A- 108 587 404
- JP-A- 2006 292 160
- JP-A- 2007 332 269
- JP-A- 2008 189 892
- JP-A- H09 109 703
- JP-B2- 3 893 985

## Description

### TECHNICAL FIELD

The present invention relates to a coating agent for oil seal. More particularly, the present invention relates to a coating agent for oil seal having excellent dispersibility for fillers.

### BACKGROUND ART

Oil seal is widely used as an important machine element in the field of vehicles, industrial machines, and the like. Oil seal is used for the purpose of movement and sliding; In that case, however, deterioration of the seal oil and the sealing material due to the frictional heat of the seal, and energy loss in devices due to frictional resistance often become problem.

In order to reduce the torque of the oil seal, it is preferable that oil is held on the sliding surface. To satisfy this purpose, it is required to improve wettability with oil by increasing the roughness of the sliding surface. However, in the case of a coating agent comprising, as a filler, only fluororesin particles having a low particle size of about 0.1 to 10 µm, which are conventionally used in coating agents, the surface energy of fluororesin is high, so that it is difficult to significantly improve wettability with oil. Further, because of the small particle size, it is also difficult to increase the roughness of the coating surface.

Meanwhile, the friction of oil seal can be reduced by forming a coating film using of a material having a friction coefficient lower than that of the sealing material on the sliding surface of the oil seal lip part; however, if the coating film is removed during sliding, the effect of reducing friction is lost.

The present applicant has previously proposed, in Patent Documents 1 and 2, surface-treating agents for vulcanized rubber comprising 10 to 160 parts by weight respectively of a wax having a softening point of 40 to 160°C and a fluororesin, or 10 to 160 parts by weight respectively of a fluororesin and a polyethylene resin, based on 100 parts by weight of isocyanate group-containing 1,2-polybutadiene, wherein the surface-treating agents are prepared as organic solvent solutions. These surface-treating agents are supposed to be effectively applicable to oil seal and the like; however, further lower torque characteristics are demanded.

To address this problem, the present applicant has further proposed a coating agent for oil seal comprising 10 to 160 parts by weight of a fluororesin, silica, silicone resin, or polycarbonate filler having a particle size of 0.5 to 30 µm based on 100 parts by weight of isocyanate group-containing 1,2-polybutadiene, and being prepared as an organic solvent solution, wherein a contact angle between a substrate surface coated with the coating agent and engine oil is less than 35°. However, further improvements are required for the dispersibility of the PTFE filler, which is a fluororesin (Patent Document 3).

Here, a dispersant is added to improve the dispersibility of PTFE; however, if a large amount of dispersant is added, the strength of a film formed from the coating agent is reduced. In contrast, if a filler other than PTFE is used, abrasion resistance is lowered. Therefore, it was difficult to obtain a balance between the strength of the coating agent and its dispersibility.

### PRIOR ART DOCUMENTS

### PATENT DOCUMENTS

Patent Document 1 : JP-B-3893985
Patent Document 2 : JP-B-4873120
Patent Document 3 : WO 2016/132982 A1

### OUTLINE OF THE INVENTION

### PROBLEM TO BE SOLVED BY THE INVENTION

An object of the present invention is to provide a coating agent that can exhibit excellent seal performance inherent in oil seal while maintaining excellent dispersibility of the coating agent, and that can further achieve low torque characteristics.

### MEANS FOR SOLVING THE PROBLEM

The above object of the present invention can be achieved by a coating agent for oil seal comprising 10 to 90 parts by weight of a filler and 10 to 40 parts by weight of a wax based on 100 parts by weight of isocyanate group-containing 1,2-polybutadiene, and being prepared as an organic solvent solution, wherein as the filler, silicone resin particles having a particle size of 0.5 to 10 µm and fluororesin particles having a particle size of 0.1 to 2 µm are each used at a ratio of 20 to 80 wt.% of the total filler amount.

### EFFECT OF THE INVENTION

The combined use of fluororesin particles and silicone resin particles as the fillers to be contained in the coating agent ensures the dispersibility of the coating agent. When silicone resin particles having a large particle size are used, and a coating is selected so that the contact angle between the coated oil seal surface and engine oil is less than 35°, while the roughness of the coating surface increases, wettability with oil can be improved, and dynamic friction coefficient in oil can be reduced. Therefore, the excellent effect of achieving low torque characteristics for oil seal can be exhibited.

### EMBODIMENTS FOR CARRYING OUT THE INVENTION

As the isocyanate group-containing 1,2-polybutadiene, one having a molecular weight of about 1,000 to 3,000 in which an isocyanate group is added as a terminal group is used. This can be commercial products. Products such as, Nisso TP-1001 produced by Nippon Soda Co., Ltd. (solution containing 50 wt.% of butyl acetate), which can be used as they are. Because an isocyanate group is added as a terminal group, reaction with the functional group on the surface of vulcanized rubber and the hydroxyl group-containing component occurs to cause adhesion and curing. The affinity and compatibility of the polybutadiene resin with rubber are superior to those of polyurethane resin that reacts with a similar isocyanate group to achieve a higher molecular weight. Thus, the polybutadiene resin is characterized by excellent adhesion with rubber, particularly excellent friction and abrasion resistance characteristics.

As fillers, fluororesin particles having a particle size (measured by image analysis) of 0.1 to 2 µm, preferably 0.1 to 0.5 µm, and silicone resin particles having a particle size of 0.5 to 10 µm, preferably 0.5 to 5 µm, are each used at a rate of 20 to 80 wt.% of the total filler amount. The fluororesin particles make it possible to form a coating film with excellent abrasion resistance. This effect can be exhibited even when a small amount of the fluororesin particles is compounded, and the durability of the coating agent can be improved. Moreover, the silicone resin particles are less likely to aggregate and have low specific gravity; thus, they have characteristics that they are well dispersed in the coating liquid and no dispersant is required.

If the particle size of the fluororesin particles is larger than this range, the aggregation of the fluororesin particles gets large, and it becomes difficult to control the surface roughness of the coating film. In particular, if the size of the aggregates exceeds 30 µm, the roughness of the coating surface gets greater, sealing properties are deteriorated to cause the leakage of oil. Furthermore, since the fluororesin particles have a high specific gravity, when the particle size is large, the effect of a dispersant cannot be exhibited. As a result, precipitation occurs, and the stability of the coating liquid is impaired.

If the particle size of the silicone resin particles is smaller than this range, the roughness of the coating surface gets smaller, and the effect of holding oil cannot be maintained, increasing the torque of the seal sliding surface. In contrast, if the particle size of the silicone resin particles is greater than this range, the precipitation speed gets faster, and precipitates called "hard cake" are formed after leaving for a long period of time.

Moreover, if the rate of the fluororesin particles is less than this range, abrasion resistance is deteriorated. In contrast, if the fluororesin particles are used at a ratio greater than this range, the surface roughness of the coating film gets smaller, the oil holding force is lowered to increase oil repellency, and torque gets higher. In addition, the contact angle to engine oil and the friction coefficient both tend to increase.

Examples of fluororesins include polytetrafluoroethylene [PTFE], tetrafluoroethylene/hexafluoropropylene copolymers, tetrafluoroethylene/perfluoro(alkyl vinyl ether) copolymers, polyvinylidene fluoride, polyvinyl fluoride, ethylene/tetrafluoroethylene copolymers, and the like. Usable examples of such fluororesin particles include fluororesins classified to the particle size of about 0.1 to 2 µm obtained by bulk polymerization, suspension polymerization, solution polymerization, emulsion polymerization, or the like; dispersions liquids finely dispersed to about 0.1 to 2 µm by shearing and stirring obtained by suspension polymerization, solution polymerization, emulsion polymerization, or the like; fluororesins pulverized to about 2 µm or less obtained by the above polymerization methods, through dry grinding or cool grinding after coagulation and drying; and the like.

Further, as the silicone resin, condensation reaction type silicone resins, addition reaction type silicone resins, UV or electron beam curing type silicone resins, and the like such as polymethylsilsesquioxane (methyltrimethoxysilane polymer), are used. In the present invention, these are not particularly limited as long as the particle size is within the specified range, and commercial products can be used as they are.

As fillers, other than fluororesin particles and silicone resin particles, for example, particles of silica and polycarbonate can also be used in combination to the extent that the desired purpose of the present application is not impaired. These fillers are used in the total amount of 10 to 90 parts by weight, preferably 40 to 80 parts by weight, based on 100 parts by weight of the isocyanate group-containing 1,2-polybutadiene. If the total filler amount is greater than this range, the adhesion to the rubber of the coating film and the friction and abrasion resistance characteristics are deteriorated. In addition, the flexibility of the coating film is impaired, and cracks occur in the coating film after curing. In contrast, if the total filler amount is less than this range, sliding properties are deteriorated. In addition, the surface roughness of the coating film is reduced, and the oil holding capability is lowered to increase torque.

In the coating agent, a wax is further used at a ratio of 10 to 40 parts by weight, preferably 10 to 30 parts by weight, based on 100 parts by weight of the isocyanate group-containing 1,2-polybutadiene. If the wax is used at a ratio less than this range, abrasion resistance is lowered, and it gets difficult to control the precipitation of the fluororesin particles and the formation of precipitates of silicone resin particles. In contrast, if the wax is used at a ratio greater than this range, the coating agent is softened, and abrasion resistance is lowered.

The use of a wax improves the abrasion resistance of the coating film. In addition, mixing a wax, which has a low specific gravity, with the fluororesin particles can prevent aggregation and precipitation of the fluororesin particles, and suppress hard cake (precipitates) of the silicone resin particles.

As waxes, plant waxes, petroleum waxes, synthetic waxes, and the like having a melting point of about 40 to 160°C, preferably about 60 to 120°C are used. Plant waxes include carnauba wax, candelilla wax, rice wax, and the like; petroleum waxes include paraffin wax, microcrystalline wax, and the like; and synthetic waxes include polyethylene wax, Fischer-Tropsch wax, fatty acid amide, various modified waxes, and the like. In general, commercially available waxes having a predetermined melting point can be used as they are.

If a wax having a melting point of about 40 to 160°C is used, the wax is melted during the baking of the coating agent and is dispersed uniformly in the binder resin. If a wax having a melting point of higher than this range is used, the wax is not melted after the baking of the coating, and the wax part that has formed a lump may cause a decrease in adhesion with the substrate. In contrast, if a wax having a melting point of lower than this range is used, the high temperature environment during use of the product may cause the wax component to be released, and the friction and abrasion resistance characteristics of the coating agent may be degraded.

The above components are prepared as a solution (dispersion) of an organic solvent, which is used as a coating agent for oil seal. Examples of organic solvents include toluene, xylene, ethyl acetate, butyl acetate, methyl ethyl ketone, methyl isobutyl ketone, and the like. Organic solvents that are commercially available in general can be used as they are. The amount of dilution with an organic solvent is suitably selected depending on the coating thickness and the coating method. The coating thickness is generally about 1 to 30 µm, preferably about 3 to 20 µm. If the coating thickness is less than this range, the entire rubber surface cannot be coated, and sliding properties and non-adhesiveness may be impaired. In contrast, if the coating thickness is greater than this range, the stiffness of the coating surface becomes higher, and sealing properties and flexibility may be impaired. The coating thickness is preferably about 3 to 20 µm for use application such as seal parts.

In the present invention, the coating agent is finally prepared as an organic solvent solution, and the coating agent is used, in which the contact angle between the coated oil seal surface and engine oil, such as Engine Oil OW-20, is less than 35° after coating of the oil seal surface. If filler particles that cause the contact angle after coating to be larger than this are used, oil is repelled, and the oil holding capability of the oil seal sliding surface is impaired. Thus, it becomes difficult to achieve the desired low torque characteristics.

Examples of the rubber constituting oil seal that can be treated with such a coating agent include general rubber materials such as fluororubber, nitrile rubber, hydrogenated nitrile rubber, ethylene-propylene rubber, styrene-butadiene rubber, acrylic rubber, chloroprene rubber, butyl rubber, and natural rubber. Among them, rubber materials having little blooming of rubber compounding agents such as an antioxidant and oil, which are compounded in the rubber, to the rubber surface layer are preferably used. The compounding proportion of each component, the type of organic solvent, the amount of organic solvent, and the organic solvent mixing ratio are suitably selected depending on rubber materials and the purposes.

Examples of coating methods of the coating agent on an oil seal surface include dipping, spraying, roll coater, flow coater, and the like, but it is not limited to these methods. In this case, it is preferable for dirt and the like on the rubber surface to be previously removed by washing or the like before the coating agent is applied. In particular, washing with water, a detergent, a solvent solution, etc., and drying are performed when materials bloomed and bled from the rubber are deposited on its surface.

After the coating agent is applied on the oil seal surface, heat treatment is performed at about 150 to 250°C for about 10 minutes to 24 hours. If the heating temperature is lower than this range or the heating time is shorter than this range, the curing of the film and the adhesion with the rubber are insufficient, and non-adhesiveness and sliding properties are deteriorated. In contrast, if the heating temperature is higher than this range or the heating time is longer than this range, heat aging of the rubber occurs. Therefore, it is necessary to suitably set a heating temperature and heating time depending on the heat resistance of each rubber.

Moreover, for items for which a reduction in the amount of outgassing is required, heat treatment, reduced pressure treatment, extraction treatment, etc., can be performed singly or in combination; however, heat treatment is economically the best. In order to reduce the amount of outgassing, it is preferable to perform heat treatment at about 150 to 250°C for about 1 to 24 hours. In order to gasify low molecular weight components in the rubber and low molecular weight components contained in polybutadiene in the film, the higher the temperature and the longer the time, the more effective.

### EXAMPLES

The following describes the present invention with reference to Examples.

### Example 1

| | | |
|---|---|---|
| Isocyanate group-containing 1,2-polybutadiene | | 200 parts by weight |
| | (TP1001, produced by Nippon Soda Co., Ltd.; containing 50 % of butyl acetate) | (100 parts by weight) |
| Polymethylsilsesquioxane particles | | 30 parts by weight |
| | (Tospearl 130, produced by Momentive; particle size: 3 µm) | |
| Polytetrafluoroethylene particles | | 30 parts by weight |
| | (Fluon 172J, produced by AGC Seimi Chemical Co., Ltd.; particle size: 0.2 µm) | |
| Paraffin wax (melting point: 100°C) | | 20 parts by weight |
| Butyl | acetate | (remnant) parts by weight |
| Total | | 2000 parts by weight |

Each of the above components was mixed, and a coating agent solution comprising this butyl acetate solution was sprayed to vulcanized rubber with a thickness of 2 mm, in thickness of 10 to 30 µm. After heat treatment at 200°C for 10 hours, the surface roughness, contact angle, dynamic friction coefficient in oil, and abrasion resistance were measured or evaluated. In addition, the dispersibility and redispersibility of the coating liquid were also evaluated. Each of the parts by weight is represented by a part by weight of the solution, and the net part by weight of each component is shown in parentheses (the same applies to the following Examples and Comparative Examples).

Dispersibility: After the coating liquid was prepared, the precipitation speed of the silicone resin particles or fluororesin particles was visually confirmed. When no precipitation was observed after 10 minutes, this case was evaluated as O, and when precipitation was observed within less than 10 minutes, this case was evaluated as ×.
Redispersibility: After the coating liquid was prepared, hard cake (precipitate) after standing for a day was redispersed. When the precipitate was redispersed by stirring for one hour, this case was evaluated as O, and when there was a residue, this case was evaluated as ×.
Surface roughness Rz: according to JIS B0601 (1994), using Accretech Surfcom 1400A, produced by Tokyo Seimitsu Co., Ltd.
Contact angle: Using Drop Master 500 (produced by Kyowa Interface Science Co., Ltd.), the contact angle to Engine Oil OW-20 was measured. A contact angle of less than 35° was evaluated as O, and a contact angle of 35° or more was evaluated as ×.
Dynamic friction coefficient in oil: Using a surface property tester (HEIDON TYPE14DR, produced by Shinto Scientific Co., Ltd.), reciprocation was carried out under the following conditions, and the dynamic friction coefficient on the forward side was measured. A dynamic friction coefficient of less than 0.2 was evaluated as O, and a dynamic friction coefficient of 0.2 or more was evaluated as ×.
Load: 50 g
Rate: 50 mm/min
Reciprocation distance: 50 mm
Indenter: a steel ball having a diameter of 10 mm
Oil type: Engine Oil OW-20
Note: The dynamic friction coefficient in oil is an evaluation correlated with the real system evaluation of oil seal. When the dynamic friction coefficient in oil using the above test piece is low, the real system evaluation using oil seal is supposed to be excellent.

Abrasion resistance: Using Friction Player FPR-2000 (produced by Rhesca. Co., Ltd.), a SUS pin with a diameter of 0.4 mm was pressed against the surface of the coating film at 80°C under a load of 300 g in a dry state, and rotated at a linear speed of 400 mm/sec. Then, the distance until the coating film was peeled off to expose the rubber was measured. A distance of 0.1 km or more was evaluated as O, and a distance of less than 0.1 km was evaluated as ×.

### Example 2

In Example 1, the same amount (30 parts by weight) of XC99-A8808 produced by Momentive (particle size: 0.7 µm) was used as the polymethylsilsesquioxane particles.

### Example 3

**In** Example **1,** the same amount (30 parts by weight) of Tospearl 1100 produced by Momentive (particle size: 10 µm) was used as the polymethylsilsesquioxane particles.

### Example 4

**In** Example **1,** the amount of polymethylsilsesquioxane particles was changed to 56 parts by weight, and the amount of polytetrafluoroethylene particles was changed to 24 parts by weight, respectively.

### Example 5

**In** Example **1,** the amount of polymethylsilsesquioxane particles was changed to 24 parts by weight, and the amount of polytetrafluoroethylene particles was changed to 56 parts by weight, respectively.

### Comparative Example 1

**In** Example **1,** the same amount (30 parts by weight) of Tospearl 3120 produced by Momentive (particle size: 12 µm) was used as the polymethylsilsesquioxane particles.

### Comparative Example 2

**In** Example **1,** the amount of polymethylsilsesquioxane particles was changed to 40 parts by weight, and no polytetrafluoroethylene particle were used.

### Comparative Example 3

**In** Example **1,** the amount of polymethylsilsesquioxane particles was changed to 45 parts by weight, and the amount of polytetrafluoroethylene particles was changed to 5 parts by weight, respectively.

### Comparative Example 4

In Example 1, the amount of polymethylsilsesquioxane particles was changed to 10 parts by weight, and the amount of polytetrafluoroethylene particles was changed to 55 parts by weight, respectively.

### Comparative Example 5

In Example 1, no polymethylsilsesquioxane particle were used, and the amount of polytetrafluoroethylene particle was changed to 40 parts by weight.

### Comparative Example 6

In Example 1, the amount of polymethylsilsesquioxane particles was changed to 50 parts by weight, and the amount of polytetrafluoroethylene particles was changed to 50 parts by weight, respectively.

### Comparative Example 7

In Example 1, neither polymethylsilsesquioxane particles nor polytetrafluoroethylene particles were used.

### Comparative Example 8

In Example 1, the amount of paraffin wax was changed to 5 parts by weight.

### Comparative Example 9

In Example 1, the amount of paraffin wax was changed to 60 parts by weight.

### Comparative Example 10

In Example 1, 30 parts by weight of Fluon 150J (particle size: 10 µm, produced by AGC Seimi Chemical Co., Ltd.) was used as the polytetrafluoroethylene particles, and no paraffin wax was used.
The results obtained in the above Examples and Comparative Examples are shown in the following Tables 1 and 2.

**Table 1**

| | Example | | | | |
|---|---|---|---|---|---|
| Measurement evaluation item | 1 | 2 | 3 | 4 | 5 |
| Dispersibility of the silicone resin particles | ○ | ○ | ○ | ○ | ○ |
| Redispersibility of the silicone resin particles | ○ | ○ | △ | ○ | ○ |
| Dispersibility of the fluororesin particles | ○ | ○ | ○ | ○ | ○ |
| Surface roughness (µm) | 16.5 | 5.6 | 21.5 | 10.5 | 12.7 |
| Contact angle (° ) | 21.3 | 25.3 | 14.5 | 19.4 | 20.8 |
| | ○ | ○ | ○ | ○ | ○ |
| Dynamic friction coefficient in oil | 0.18 | 0.20 | 0.18 | 0.18 | 0.19 |
| | ○ | ○ | ○ | ○ | ○ |
| Abrasion resistance | ○ | ○ | ○ | ○ | ○ |

**Table 2**

| | Comparative Example | | | | | | | | | |
|---|---|---|---|---|---|---|---|---|---|---|
| Measurement evaluation item | 1 | 2 | 3 | 4 | 5 | 6 | 7 | 8 | 9 | 10 |
| Dispersibility of the silicone resin particles | ○ | ○ | ○ | ○ | - | ○ | - | ○ | ○ | ○ |
| Redispersibility of the silicone resin particles | × | ○ | ○ | ○ | - | ○ | - | △ | ○ | × |
| Dispersibility of the fluororesin particles | ○ | - | ○ | ○ | ○ | ○ | - | × | ○ | × |
| Surface roughness | 31.2 | 5.4 | 7.7 | 4.2 | 3.1 | 24.6 | 1.2 | 21.5 | 6.4 | 42.3 |
| Contact angle (° ) | 15.8 | 20.1 | 24.5 | 38.5 | 39.0 | 21.0 | 40.2 | 38.9 | 15.0 | 42.9 |
| | ○ | ○ | ○ | × | × | ○ | × | × | ○ | × |
| Dynamic friction coefficient in oil | 0.15 | 0.18 | 0.15 | 0.25 | 0.32 | 0.30 | 0.23 | 0.23 | 0.40 | 0.31 |
| | ○ | ○ | ○ | × | × | × | × | × | × | × |
| Abrasion resistance | ○ | × | × | ○ | ○ | × | × | × | × | ○ |

The above results demonstrate the followings.
(1) The coating agent obtained in each Example exhibits excellent seal performance inherent in oil seal while maintaining excellent dispersibility, and further achieves low torque characteristics.
(2) If silicone resin particles having a large particle size are used, redispersibility is deteriorated to interfere with coating (Comparative Example 1).
(3) If the rate of the fluororesin particles in the total filler amount is small, abrasion resistance is deteriorated (Comparative Examples 2 and 3). Conversely, if the rate of the fluororesin particles in the total filler amount is large, oil is repelled, and the contact angle and the friction coefficient in oil increase (Comparative Examples 4 and 5).
(4) If the total filler amount is large, the surface roughness of the coating film increases, causing the convex portion to run out of oil. If the total filler amount is small, the surface roughness decreases. In either case, the friction and abrasion resistance effect are reduced (Comparative Examples 6 and 7).
(5) If the amount of the wax is small, the dispersibility of the fluororesin particles is not ensured (Comparative Example 8).
(6) If the amount of the wax is large, the coating film is softened, and the friction and abrasion resistance characteristics are deteriorated (Comparative Example 9).
(7) If no wax is used, the dispersibility is deteriorated, and the desired contact angle cannot be achieved (Comparative Example 10).

### INDUSTRIAL APPLICABILITY

The coating agent according to the present invention achieves low torque characteristics, while maintaining excellent seal performance inherent in oil seal; therefore, the coating agent according to the present invention can be effectively used not only for oil seal, but also for prevention of adhesion, reduction of friction, prevention of abrasion, etc., of rubber parts, such as rubber rolls for copiers, rubber belts for copiers, industrial rubber hoses, industrial rubber belts, wipers, automobile weather strips, glass runs, and the like.

## Claims

1. A coating agent for oil seal comprising 10 to 90 parts by weight of a filler and 10 to 40 parts by weight of a wax, based on 100 parts by weight of isocyanate group-containing 1,2-polybutadiene, and being prepared as an organic solvent solution, wherein as the filler, silicone resin particles having a particle size of 0.5 to 10 µm and fluororesin particles having a particle size of 0.1 to 2 µm are each used at a ratio of 20 to 80 wt.% of the total filler amount; and wherein the particle size of the filler particles is measured by image analysis.

2. The coating agent for oil seal according to claim 1, wherein the silicone resin particles are polymethylsilsesquioxane particles.

3. The coating agent for oil seal according to claim 1, wherein silicone resin particles having a particle size of 0.5 to 5 µm are used.

4. The coating agent for oil seal according to claim 1, wherein fluororesin particles having a particle size of 0.1 to 0.5 µm particles are used.

5. The coating agent for oil seal according to claim 1, wherein the filler in an amount of 40 to 80 parts by weight is used.

6. The coating agent for oil seal according to claim 1, wherein the wax in an amount of 10 to 30 parts by weight is used.

7. An oil seal, which is subjected to coating treatment using the coating agent according to claim 1.

8. The oil seal according to claim 7, wherein after coating treatment is performed, heat treatment is performed at 150 to 250°C for 10 minutes to 24 hours.

9. The oil seal according to claim 7 or 8, wherein a contact angle between an oil seal surface and engine oil is less than 35°.

## Patentansprüche

1. Beschichtungsmittel für Öldichtungen, umfassend 10 bis 90 Gewichtsteile eines Füllstoffs und 10 bis 40 Gewichtsteile eines Wachses, bezogen auf 100 Gewichtsteile eines Isocyanatgruppen enthaltenden 1,2-Polybutadiens, und hergestellt als Lösung in einem organischen Lösungsmittel, wobei als Füllstoff Silikonharzpartikel mit einer Partikelgröße von 0,5 bis 10 µm und Fluorharzpartikel mit einer Partikelgröße von 0,1 bis 2 µm jeweils in einem Anteil von 20 bis 80 Gew.-% der Gesamtfüllstoffmenge verwendet werden; und wobei die Partikelgröße der Füllstoffpartikel durch Bildanalyse gemessen wird.

2. Beschichtungsmittel für Öldichtungen nach Anspruch 1, wobei die Silikonharzpartikel Polymethylsilsesquioxanpartikel sind.

3. Beschichtungsmittel für Öldichtungen gemäß Anspruch 1, wobei Silikonharzpartikel mit einer Partikelgröße von 0,5 bis 5 µm verwendet werden.

4. Beschichtungsmittel für Öldichtungen gemäß Anspruch 1, wobei Fluorharzpartikel mit einer Partikelgröße von 0,1 bis 0,5 µm verwendet werden.

5. Beschichtungsmittel für Öldichtungen gemäß Anspruch 1, wobei der Füllstoff in einer Menge von 40 bis 80 Gewichtsteilen verwendet wird.

6. Beschichtungsmittel für Öldichtungen gemäß Anspruch 1, wobei Wachs in einer Menge von 10 bis 30 Gewichtsteilen verwendet wird.

7. Öldichtung, die einer Beschichtungsbehandlung, unter Verwendung des Beschichtungsmittels gemäß Anspruch 1 unterzogen wird.

8. Öldichtung gemäß Anspruch 7, wobei nach der Beschichtungsbehandlung eine Wärmebehandlung bei 150 bis 250°C für 10 Minuten bis 24 Stunden durchgeführt wird.

9. Öldichtung gemäß Anspruch 7 oder 8, wobei der Kontaktwinkel zwischen einer Öldichtungsfläche und Motoröl weniger als 35°C beträgt.

## Revendications

1. Agent de revêtement pour joint d'étanchéité à l'huile comprenant 10 à 90 parties en poids d'une charge et 10 à 40 parties en poids d'une cire, sur la base de 100 parties en poids de 1,2-polybutadiène contenant des groupes isocyanates, et préparé sous forme d'une solution dans un solvant organique, dans lequel, en tant que charge, des particules de résine silicone ayant une taille de particule de 0,5 à 10 µm et des particules de résine fluorée ayant une taille de particule de 0,1 à 2 µm sont utilisées chacune dans un rapport de 20 à 80 % en poids de la quantité totale de charge ; et dans lequel la taille des particules de charge est mesurée par analyse d'image.

2. Agent de revêtement pour joint d'étanchéité à l'huile selon la revendication 1, dans lequel les particules de résine de silicone sont des particules de polyméthylsilsesquioxane.

3. Agent de revêtement pour joint d'étanchéité à l'huile selon la revendication 1, dans lequel des particules de résine silicone ayant une taille de particule de 0,5 à 5 µm sont utilisées.

4. Agent de revêtement pour joint d'étanchéité à l'huile selon la revendication 1, dans lequel des particules de résine fluorée ayant une taille de particules de 0,1 à 0,5 µm sont utilisées.

5. Agent de revêtement pour joint d'étanchéité à l'huile selon la revendication 1, dans lequel la charge est utilisée en une quantité de 40 à 80 parties en poids.

6. Agent de revêtement pour joint d'étanchéité à l'huile selon la revendication 1, dans lequel la cire est utilisée en une quantité de 10 à 30 parties en poids.

7. Joint d'étanchéité à l'huile, qui est soumis à un traitement de revêtement à l'aide de l'agent de revêtement selon la revendication 1.

8. Joint d'étanchéité selon la revendication 7, dans lequel, après le traitement de revêtement, un traitement thermique est effectué à une température comprise entre 150 et 250°C pendant 10 minutes à 24 heures.

9. Joint d'étanchéité selon la revendication 7 ou 8, dans lequel l'angle de contact entre la surface du joint d'étanchéité et l'huile moteur est inférieur à 35°C.
